(19) Europäisches Patentamt
European Patent Office
Office européen des brevets

(11) **EP 2 474 513 A1**

(12) **EUROPEAN PATENT APPLICATION**
published in accordance with Art. 153(4) EPC

(43) Date of publication:
**11.07.2012 Bulletin 2012/28**

(51) Int Cl.:
*C04B 35/46* (2006.01)

(21) Application number: **10813849.6**

(22) Date of filing: **01.09.2010**

(86) International application number:
**PCT/JP2010/065361**

(87) International publication number:
**WO 2011/027904 (10.03.2011 Gazette 2011/10)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **03.09.2009 JP 2009203817**

(71) Applicant: **Sumitomo Chemical Company, Limited Tokyo 104-8260 (JP)**

(72) Inventors:
• **UOE, Kousuke**
  **Niihama-shi**
  **Ehime 792-0025 (JP)**
• **KAN, Masahiro**
  **Niihama-shi**
  **Ehime 792-0865 (JP)**

(74) Representative: **Vossius & Partner**
  **Siebertstrasse 4**
  **81675 München (DE)**

(54) **METHOD FOR PRODUCING ALUMINUM TITANATE BAKED BODY AND ALUMINUM TITANATE BAKED BODY**

(57)    The present invention is a process for producing an aluminum titanate-based fired body, comprising shaping a starting material mixture containing inorganic compound source powders including an aluminum source powder and a titanium source powder, as well as an additive, degreasing the obtained shaped body at 150 to 900°C, and firing the degreased shaped body at not lower than 1300°C, wherein the inorganic compound source powders contain 1 to 5 parts by mass of particles having a particle diameter of not larger than 0.1 $\mu$m in 100 parts by mass thereof.

EP 2 474 513 A1

**Description**

TECHNICAL FIELD

The present invention relates to a process for producing an aluminum titanate-based fired body, and an aluminum titanate-based fired body.

BACKGROUND ART

Aluminum titanate-based ceramics has been known as ceramics containing titanium and aluminum as constitutive elements, having a crystal pattern of aluminum titanate in an x-ray diffraction spectrum, and being excellent in heat resistance. Aluminum titanate-based ceramics, which has conventionally been used as firing tools such as crucibles, recently increased its utility value in industrial fields as a material for constituting a ceramics filter for collecting fine carbon particles contained in exhaust gases discharged from an internal combustion engine such as a diesel engine.

A process known for producing such an aluminum titanate-based ceramics comprises shaping a starting material mixture containing an aluminum source powder and a titanium source powder, and firing the obtained shaped body (WO 2005/105704). Another process also known comprises heating a shaped body of a starting material mixture further containing an additive such as an organic binder or a pore-forming agent at 150 to 900°C in an oxygen-containing atmosphere; removing the additive by heating; and firing the shaped body at not lower than 1300°C thereafter (paragraphs 0031 and 0032 of WO 2005/105704).

However, the shaped body obtained in these conventional processes has low mechanical strength and the shape therefore may not be retained at the time of additive removal by heating or firing thereafter. It is particularly difficult for the shaped body having honeycomb structure to retain the shape at the time of additive removal by heating or firing thereafter.

DISCLOSURE OF THE INVENTION

The present invention aims to provide a process for producing an aluminum titanate-based fired body in which a shaped body obtained has high mechanical strength and can retain its shape at the time of degreasing or firing, and an aluminum titanate-based fired body obtained thereby.

The present invention is a process for producing an aluminum titanate-based fired body, comprising shaping a starting material mixture containing inorganic compound source powders including an aluminum source powder and a titanium source powder, as well as an additive; degreasing the obtained shaped body at 150 to 900°C; and firing the degreased shaped body at not lower than 1300°C; wherein the inorganic compound source powders contain 1 to 5 parts by mass of particles having a particle diameter of not larger than 0.1 $\mu$m in 100 parts by mass thereof.

The inorganic compound source powders preferably include a silicon source powder further.

The inorganic compound source powders preferably include a magnesium source powder further.

The molar ratio of the aluminum source powder expressed on $Al_2O_3$ basis to the titanium source powder expressed on $TiO_2$ basis is in a range of 35 / 65 to 45 / 55 in the starting material mixture.

The shaped body preferably has a honeycomb structure.

The present invention also relates to an aluminum titanate-based fired body obtained by the process of the present invention.

BEST MODE FOR CARRYING OUT THE INVENTION

<Process for producing aluminum titanate-based fired body>

In the production process of an aluminum titanate-based fired body of the present invention, a starting material mixture containing inorganic compound source powders and an additive is shaped; the obtained shaped body is degreased; and the degreased shaped body is fired. An aluminum titanate-based fired body obtained from the starting material mixture comprises an aluminum titanate-based crystal. The inorganic compound source powders in the starting material mixture contains elements constituting a ceramics shaped body, and the powders are typically one or more kinds of aluminum source powders, one or more kinds of titanium source powders, one or more kinds of magnesium source powders, and one or more kinds of silicon source powders. Note that the inorganic component contained in the additive is also included in the inorganic compound source powders, when the starting material mixture contains an additive such as a pore-forming agent, a binder, a lubricant, a plasticizer, or a dispersant.

(Aluminum source powder)

An aluminum source powder, contained in the inorganic compound source powders, is a powder of a compound to become an aluminum component constituting an aluminum titanate-based fired body. Examples of the aluminum source powder include a powder of alumina (aluminum oxide). The alumina may be crystalline or amorphous- Examples of the crystal type of the alumina include γ-type, δ-tpe, θ-type, and α-type and particularly, α-type is preferable.

The aluminum source powder may be a powder of a compound to be led to alumina by firing in the air. Examples of the compound include an aluminum salt, an aluminum alkoxide, aluminum hydroxide, and metal aluminum.

The aluminum salt may be a salt with inorganic acid or a salt with organic acid. Specific examples of the inorganic salt include aluminum nitrates such as aluminum nitrate and ammonium aluminum nitrate; and aluminum carbonates such as ammonium aluminum carbonate. Examples of the organic salt include aluminum oxalate, aluminum acetate, aluminum stearate, aluminum lactate, and aluminum laurate.

Specific examples of the aluminum alkoxide include aluminum isopropoxide, aluminum ethoxide, aluminum sec-butoxide, and aluminum tert-butoxide.

The aluminum hydroxide may be crystalline or amorphous. Examples of the crystal type of the aluminum hydroxide include gibbsite type, bayerite type, nordstrandite type, boehmite type, and pseudoboehmite type. Examples of the amorphous aluminum hydroxide include aluminum hydrolysate obtained by hydrolyzing an aqueous solution of a water-soluble aluminum compound such as an aluminum salt or an aluminum alkoxide.

An alumina powder is preferable as an aluminum source powder, and an α-type alumina powder is more preferable out of the above-mentioned aluminum source powders. Note that the aluminum source powder may contain trace components derived from its raw material or inevitably contained in its production process.

In the process of the present invention, the inorganic compound source powders contain 1 to 5 parts by mass of particles having a particle diameter of not larger than 0.1 $\mu$m in 100 parts by mass thereof.

In order to obtain inorganic compound source powders having such particle diameter distribution, it is preferable to mix therein one or more kinds of alumina sol, and/or one or more kinds of silica sol in the following description. It becomes possible by adding alumina sol, silica sol and the like to adjust the content of particles having a particle diameter of not larger than 0.1 $\mu$m to 1 to 5 parts by mass in 100 parts by mass of the inorganic compound source powders, and provide a mechanical strength of not lower than 0.2 kgf for a shaped body after degreasing at 500°C.

Alumina sol means a colloid comprised of finely granular alumina as a dispersoid and a liquid as a dispersion medium. The alumina sol may be used solely as an aluminum source powder; however, it is preferable to be used in combination with other aluminum source powders. The dispersion medium of the alumina sol is removed at the time of mixing inorganic compound sources or degreasing the obtained shaped body for example, by evaporation and the like.

Examples of the dispersion medium of the alumina sol include aqueous solutions such as an aqueous hydrochloric acid solution, an aqueous acetic acid solution, and an aqueous nitric acid solution; and organic solvents such as alcohols, xylene, toluene, and methyl isobutyl ketone. The alumina sol used preferably is colloidal alumina sol having an average particle diameter of 1 to 100 nm. It becomes possible by using the alumina sol having such an average particle diameter to adsorb particles each other in the starting material mixture. Examples of commercially available product of alumina sol include "Aluminasol As" 100", "Aluminasol AS-200", and "Aluminasol AS-520" manufactured by Nissan Chemical Industries, Ltd., and "NanoTek $Al_2O_3$" manufactured by C.I. Kasei Co., Ltd. "Aluminasol Ass0" manufactured by Nissan Chemical Industries, Ltd. is preferably used out of them.

The content of alumina sol is 0.7 to 10 parts by weight and preferably 1 to 5 parts by weight as solid content in 100 parts by mass of the inorganic compound source powders (solid content).

(Titanium source powder)

A titanium source powder, contained in the inorganic compound source powders, is a powder of a compound to become a titanium component constituting an aluminum titanate-based fired body. Examples of the titanium source powder include a powder of titanium oxide. Examples of the titanium oxide include titanium(IV) oxide, titanium(III) oxide, and titanium(II) oxide, and preferable is titanium(IV) oxide. The titanium(TV) oxide may be crystalline or amorphous. Examples of the crystal type of the titanium(IV) oxide include anatase type, rutile type, and brookite type, and preferable are anatase type and rutile type.

The titanium source powder may be a powder of a compound to be led to titania (titanium oxide) by firing in the air. Examples of such compounds include a titanium salt, a titanium alkoxide, titanium hydroxide, titanium nitride, titanium sulfide, and metal titanium.

Specific examples of the titanium salt include titanium trichloride, titanium tetrachloride, titanium(IV) sulfide, titanium(VI) sulfide, and titanium(IV) sulfate. Specific examples of the titanium alkoxide include titanium(IV) ethoxide, titanium(IV) methoxide, titanium(IV) tert-butoxide, titanium(IV) isobutoxide, titanium(IV) n-propoxide, titanium(TV) tetraisopropoxide, and their chelate compounds.

A titanium oxide powder is preferable as a titanium source powder, and a titanium(IV) oxide powder is more preferable out of the above-mentioned titanium source powders. Note that the titanium source powder may contain trace components derived from its raw material or inevitably contained in its production process.

The particle diameter of the titanium source powder is not particularly limited and it is generally preferable that its particle diameter corresponding to a cumulative percentage of 50% on a volume basis (D50), which is measured by laser diffractometry, is 0.5 to 25 $\mu$m. In order to accomplish a sufficiently low shrinkage ratio during firing, it is more preferable to use a titanium source powder with D50 in a range of 1 to 20 $\mu$m. Note that a titanium source powder may exhibit a bimodal particle diameter distribution, and when a titanium source powder exhibiting such a bimodal distribution is used, the larger maximal value (peak) of particle diameter distribution measured by laser diffractometry is preferably in the rage of 20 to 50 $\mu$m.

The mode diameter of the titanium source powder measured by laser diffractometry is not particularly limited, and the titanium source powder having the mode diameter in the rage of 0.3 to 60 $\mu$m can be used.

In the process of the present invention, the molar ratio of the aluminum source powder expressed on $Al_2O_3$ (alumina) basis to the titanium source powder expressed on $TiO_2$ (titania) basis is preferably in a range of 35 / 65 to 45 / 55, and more preferably in a range of 40 / 60 to 45 / 55 in the starting material mixture. It becomes possible to lower the shrinkage ratio during firing of the shaped body from the starting material mixture by using an excess amount of the titanium source powder relative to the aluminum source powder within the above-mentioned range.

(Magnesium source powder)

The inorganic compound powders may contain a magnesium source powder. When the starting material mixture contains the magnesium source powder, an aluminum titanate-based fired body to be obtained is a fired body comprised of an aluminum magnesium titanate crystal. Examples of the magnesium source powder include a powder of magnesia (magnesium oxide) and a powder of a compound to be led to magnesia by firing in the air. Examples of the compound to be led to magnesia by firing in the air include a magnesium salt, a magnesium alkoxide, magnesium hydroxide, magnesium nitride, and metal magnesium.

Specific examples of the magnesium salt include magnesium chloride, magnesium perchlorate, magnesium phosphate, magnesium pyrophosphate, magnesium oxalate, magnesium nitrate, magnesium carbonate, magnesium acetate, magnesium sulfate, magnesium citrate, magnesium lactate, magnesium stearate, magnesium salicylate, magnesium myristate, magnesium gluconate, magnesium dimethacrylate, and magnesium benzoate.

Specific examples of the magnesium alkoxide may be magnesium methoxide and magnesium ethoxide. Note that the magnesium source powder may contain trace components derived from its raw material or inevitably contained in its production process.

As the magnesium source powder, powder of such as a compound serving as the magnesium source and the aluminum source can also be used. Examples of such a compound include magnesia spinel ($MgAl_2O_3$). Note that when the powder of a compound serving as the magnesium source and the aluminum source is used as the magnesium source powder, the content thereof is controlled so as to adjust the molar ratio within the above-mentioned ratio. The molar ratio is the total molar amount of the content expressed on $Al_2O_3$ (alumina) basis of the aluminum source powder and the content expressed on $Al_2O_3$ (alumina) basis of aluminum components in the powder of a compound serving as magnesium source and aluminum source, to the molar content expressed on $TiO_2$ (titania) basis of the titanium source powder.

The particle diameter of the magnesium source powder is not particularly limited, and it is generally preferable that its particle diameter corresponding to a cumulative percentage of 50% on a volume basis (D50), which is measured by laser diffractometry, is 0.5 to 30 $\mu$m. From the viewpoint of a decrease in shrinkage ratio during firing of a shaped body from a starting material mixture, it is preferable to use a magnesium source powder with D50 in the rage of 3 to 20 $\mu$m.

The content of the magnesium source powder expressed on MgO (magnesia) basis in the starting material mixture is, in a molar ratio, preferably 0.03 to 0.15, and more preferably 0.03 to 0.12 relative to the total amount of the aluminum source powder expressed on $Al_2O_3$ (alumina) basis and the titanium source powder expressed on $TiO_2$ (titania) basis. It becomes possible by adjusting the content of the magnesium source powder within the above-mentioned range to relatively easily obtain an aluminum titanate-based fired body with improved heat resistance and having large pore diameter and open porosity.

(Silicon source powder)

The inorganic compound powders may further contain a silicon source powder. The silicon source powder is a powder of a compound to become a silicon component in an aluminum titanate-based fired body. It becomes possible to obtain an aluminum titanate-based fired body with improved heat resistance by using the silicon source powder in combination. Examples of the silicon source powder include powders of a silicon oxide (silica) such as silicon dioxide and silicon monoxide.

The silicon source powder may be a powder of a compound to be led to silica by firing in the air. Examples of the compound include silicic acid, silicon carbide, silicon nitride, silicon sulfide, silicon tetrachloride, silicon acetate, sodium silicate, sodium orthosilicate, feldspar, and glass frit. Out of them, feldspar, glass frit and the like are preferably used, and from the viewpoints of easiness in industrial availability and stability in component composition, glass frit and the like are more preferably used. Glass frit means flaky or powdery glass obtained by pulverizing glasses. A powder comprised of a mixture of feldspar and glass frit is also preferably used as the silicon source powder.

When glass frit is used, glass frit having a deformation point of not lower than 700°C is preferably used from the viewpoint of further improvement in heat decomposition resistance of an aluminum titanate-based fired body to be obtained.

The deformation point of glass frit is defined as a temperature (°C) at which expansion stops and subsequently shrinkage starts, when the expansion of the glass frit is measured with thermo mechanical analysis apparatus (TMA) by elevating temperature from a low temperature.

As glasses constituting the glass frit, common silicate glass containing silicate $[SiO_2]$ as a main component (not lower than 50% by mass in the entire components) can be used. The glass constituting the glass frit may further contain, as other components, alumina $[Al_2O_3]$, sodium oxide $[Na_2O]$, potassium oxide $[K_2O]$, calcium oxide $[CaO]$, magnesia $[MgO]$ and the like, similarly to common silicate glass. In order to improve the hot water resistance of the glass itself, glasses constituting glass frit is preferable to contain $ZrO_2$.

The particle diameter of the silicon source powder is not particularly limited and it is generally preferable that its particle diameter corresponding to a cumulative percentage of 50% on a volume basis (D50), which is measured by laser diffractometry, is 0.5 to 30 $\mu$m. In order to improve the filling ratio of shaped body from the starting material mixture and obtain a fired body with higher mechanical strength, it is more preferable to use a silicon source powder with D50 in the rage of 1 to 20 $\mu$m.

When the starting material mixture contains the silicon source powder, the content of the silicon source powder expressed on $S1O_2$ (silica) basis in the starting material mixture is generally 0.1 parts by mass to 10 parts by mass, and preferably not higher than 5 parts by mass relative to 100 parts by mass of the total amount of the aluminum source powder expressed on $Al_2O_3$ (alumina) basis and the titanium source powder expressed of $TiO_2$ (titania) basis.

The content of the silicon source powder in the starting material mixture is preferably not lower than 2% by mass and not higher than 5% by mass. The silicon source powder may contain trace components derived from its raw material or inevitably contained in its production process.

In the process of the present invention, a compound having two or more metal elements out of titanium, aluminum, silicon, and magnesium as constituents similar to a composite oxide such as magnesia spinel $(MgAl_2O_4)$, can be used as a starting material powder. In such a case, the compound having two or more metal elements as constituents can be regarded as a starting material mixture obtained by mixing respective metal source compounds. Base on the above-mentioned consideration, the contents of the aluminum source powder, titanium source powder, magnesium source powder, and silicon source powder in the starting material mixture are adjusted within the above-mentioned ranges.

In the process of the present invention, in order to adjust the content of particles having a particle diameter of not larger than 0.1 $\mu$m to 1 to 5 parts by mass in 100 parts by mass of the inorganic compound source powders, it is preferable to mix one or more kinds of the alumina sol and/or one or more kinds of silica sol in the inorganic compound source powders. Silica sol means a colloid comprised of finely granular silica as a dispersoid and a liquid as a dispersion medium. The silica sol can be used solely as a silicon source powder; however, it is preferable to be used in combination with other silicon source powders. The dispersion medium of the silica sol is removed at the time of mixing inorganic compound sources or degreasing the obtained shaped body for example, by evaporation and the like.

Examples of the dispersion medium of the silica sol include aqueous solutions such as an aqueous ammonia solution and organic solvents such as alcohols, xylene, toluene, and triglyceride. The silica sol used preferably is colloidal silica sol having an average particle diameter of 1 to 100 nm. It becomes possible to adsorb particles each other in the starting material mixture, and melt and bond the particles each other at the time of firing, by using the silica sol having such an average particle diameter.

Examples of commercially available product of silica sol include "Snowtex 20, 30, 40, 50, N, O, S, C, 20L, OL, XS, XL, YL, ZL, QAS-40, LSS-35, and LSS-45" manufactured by Nissan Chemical Industries, Ltd.; "Adelite AT-20, AT-30, AT-40, AT-50, AT-20N, AT-20A, AT-30A, AT-20Q, AT-300 and AT-300Q" manufactured by Asahi Denka Co., Ltd.; "Cataloid S-20L, S-20H, S-30L, S-30H, SI-30, SI-40, SI-50, SI-350, SI-500, SI-45P, SI-80P, SN, SA and SC-30" manufactured by Catalysts and Chemicals Industries Co., Ltd.; and "Ludox HS-40, HS-30, LS, SM-30, TM, AS, and AM" manufactured by Du Pont. Out of them, "Snowtex C" that is stable in colloidal state in a neutral range is preferably used.

The content of silica sol is 0.1 to 10 parts by mass, and preferably 1 to 5 parts by mass as solid content in 100 parts by mass of the inorganic compound source powders (solid content).

Further, the starting material mixture may also contain aluminum titanate itself and aluminum magnesium titanate itself. For example, when aluminum magnesium titanate is used as a constitutive component of the starting material mixture, the aluminum magnesium titanate corresponds to a starting material serving as the titanium source, the aluminum source, and the magnesium source.

(Additives)

The starting material mixture may contain an additive such as a pore-forming agent, a binder, a lubricant, a plasticizer, a dispersant, or a solvent.

Examples of the pore-forming agent include carbon materials such as graphite; resins such as polyethylene, polypropylene, and polymethyl methacrylate; plant materials such as starch, nut shells, walnut shells, and corn; ice and dry ice. The additive content of the pore-forming agent is generally 0 to 40 parts by mass and preferably 0 to 25 parts by mass relative to 100 parts by mass of the total amount of the aluminum source powder, titanium source powder, magnesium source powder, and silicon source powder.

Examples of the binder include celluloses such as methyl cellulose, carboxyl methyl cellulose, and sodium carboxyl methyl cellulose; alcohols such as polyvinyl alcohol; salts such as lignin sulfonic acid salt; waxes such as paraffin wax and microcrystalline wax; and thermoplastic resins such as EVA, polyethylene, polystyrene, liquid crystal polymers, and engineering plastics. The additive content of the binder is generally not higher than 20 parts by mass and preferably not higher than 15 parts by mass relative to 100 parts by mass of the total amount of the aluminum source powder, titanium source powder, magnesium source powder, and silicon source powder.

Examples of the lubricant and the plasticizer include alcohols such as glycerin; higher fatty acids such as capric acid, lauric acid, palmitic acid, alginic acid, oleic acid, and stearic acid; and stearic acid metal salts such as aluminum stearate. The additive content of the lubricant or plasticizer is generally 0 to 10 parts by mass and preferably 1 to 5 parts by mass relative to 100 parts by mass of the total amount of the aluminum source powder, titanium source powder, magnesium source powder, and silicon source powder.

Examples of the dispersant include inorganic acids such as nitric acid, hydrochloric acid, and sulfuric acid; organic acids such as oxalic acid, citric acid, acetic acid, malic acid, and lactic acid; alcohols such as methanol, ethanol, and propanol; and surfactants such as ammonium polycarboxylate and polyoxyalkylene alkyl ether. The additive content of the dispersant is generally 0 to 20 parts by mass and preferably 2 to 8 parts by mass relative to 100 parts by mass of the total amount of the aluminum source powder, titanium source powder, magnesium source powder, and silicon source powder.

Examples of the solvent include monohydric alcohols such as methanol, ethanol, butanol, and propanol; dihydric glycols such as propylene glycol, polypropylene glycol, and ethylene glycol; and water. Water is preferable out of them and ion-exchanged water is more preferably used from the viewpoint of little impurities. The content of the solvent to be used is generally 10 parts by mass to 100 parts by mass and preferably 20 parts by mass to 80 parts by mass relative to 100 parts by mass of the total amount of the aluminum source powder, titanium source powder, magnesium source powder, and silicon source powder.

A starting material mixture to be provided for shaping can be obtained by mixing or kneading inorganic compound powders containing an aluminum source powder, a titanium source powder, a magnesium source powder used arbitrarily, a silicon source powder used arbitrarily, and an additive.

In the process of the present invention, a shaped body obtained by shaping the starting material mixture is degreased at 150 to 900°C, and then the degreased shaped body is fired at not lower than 1300°C to obtain an aluminum titanate-based fired body.

Compared with the case of direct firing of the starting material mixture, the shrinkage can be suppressed during firing by carrying out the firing after shaping. Cracking of an aluminum titanate-based fired body obtained is therefore efficiently suppressed and also an aluminum titanate-based fired body, in which shapes of pores generated in the porous aluminum titanate-based crystal during firing are retained, can be obtained.

The shape of the shaped body is not particularly limited, and examples thereof include a honeycomb structure, a rod-like structure, a tubular structure, a plate-like structure, and a crucible-like structure. Examples of a shaping machine used for shaping the starting material mixture include a uniaxial press machine, an extrusion shaping machine, a tableting machine, and a granulator.

The additive in the shaped body is removed or decomposed during degreasing of the shaped body.

The degreasing may be carried out typically in a period of heating to the firing temperature and the temperature range is 150 to 900°C for example. In the degreasing period, the heating rate preferably should be suppressed as much as possible.

The firing temperature of the shaped body is generally not lower than 1300°C and preferably not lower than 1400°C, and generally not higher than 1650°C, and preferably not higher than 1550°C.

The heating rate to the firing temperature is not particularly limited, and is generally 1°C/hour to 500°C/hour. When the silicon source powder is used, it is preferable to go through a period of maintaining the shaped body in a temperature range of 1100 to 1300°C for 3 hours before the firing period. Consequently, the melting and diffusion of the silicon source powder can be accelerated.

The firing is generally carried out in atmospheric air; however, the firing may be carried out in an inert gas such as nitrogen gas or argon gas, or in a reducing gas such as carbon monoxide gas or hydrogen gas, depending on the kinds of the aluminum source powder, the titanium source powder, the magnesium source powder, and the silicon source powder, and the ratio thereof to be used. Further, the firing may be carried out in an atmosphere where the partial pressure of water vapor is reduced.

The firing is generally carried out by using a common firing furnace such as a tubular electric furnace, a box type electric furnace, a tunnel furnace, an infrared furnace, a microwave heating furnace, a shaft furnace, a reverberating furnace, a rotary furnace, and a roller hearth furnace. The firing may be carried out by a batch process or by a continuous process. The firing may also be carried out in a static manner or in a fluidization manner.

The time required for the firing may be sufficient if the starting material powders are transited into an aluminum titanate-based crystal. The firing time differs depending on the amount of the starting material mixture, the model of the firing furnace, the firing temperature, and the firing atmosphere, and it is generally 10 minutes to 24 hours.

An aluminum titanate-based fired body can be obtained in the above-mentioned process. The aluminum titanate-based fired body has approximately the same shape as that of the shaped body immediately after shaping. The obtained aluminum titanate-based fired body may be processed into a desired shape by grinding processing and the like.

The aluminum titanate-based fired body obtained by the production process of the present invention can be preferably used as tools for a firing furnace such as a crucible, a setter, a sagger, and a refractory lining; exhaust gas filters and catalyst carriers to be used in exhaust gas purification for an internal combustion engine such as a diesel engine or gasoline engine; filtration filters to be used in filtration of beverage such as beer; ceramics filters such as a filter with permselectivity for selectively permeating gas components generated at the time of petroleum refining, e.g., carbon monoxide, carbon dioxide, nitrogen, and oxygen; and electronic parts such as a substrate and a capacitor. In the case of being used particularly as a ceramics filter, the aluminum titanate-based fired body obtained by the process of the present invention has a high pore volume and open porosity and therefore retain good filter capacity for a long duration.

The aluminum titanate-based fired body obtained by the process of the present invention may further have crystal patterns of alumina, titania and the like besides a crystal pattern of aluminum titanate or aluminum magnesium titanate in an x-ray diffraction spectrum. When the aluminum titanate-based fired body of the present invention comprises aluminum magnesium titanate crystal, it can be represented by a composition formula $Al_{2(1-x)}Mg_xTi_{(1+x)}O_5$, and the value for x is not lower than 0.03, preferably not lower than 0.03 and not higher than 0.15, and more preferably not lower than 0.03 and not higher than 0.12.

The aluminum titanate-based fired body obtained by the process of the present invention may further contain trace components derived from its raw materials or inevitably contained in its production process.

<Aluminum titanate-based fired body>

The aluminum titanate-based fired body of the present invention is a porous ceramics shaped body comprised of mainly an aluminum titanate-based crystal. That is, the aluminum titanate-based fired body of the present invention has an aluminum titanate-based crystal phase as a main crystal phase constituting the fired body. The aluminum titanate-based crystal phase may be, for example, an aluminum titanate crystal phase, an aluminum magnesium titanate crystal phase and the like.

The aluminum titanate-based fired body of the present invention may further contain a phase (crystal phase) other than the aluminum titanate-based crystal phase. Examples of the phase (crystal phase) other than the aluminum titanate-based crystal phase include phases derived from starting materials used for producing an aluminum titanate-bassd fired body. The phases derived from starting materials are, more particularly, derived from an aluminum source powder, a titanium source powder, and/or a magnesium source powder, which remained without forming the aluminum titanate-based crystal phase when the aluminum titanate-based fired body is produced by the process of the present invention. When the starting material mixture contains a silicon source powder, the aluminum titanate-based fired body further contains a phase derived from the silicon source powder such as a glass phase containing a $SiO_2$ component.

The shape of the aluminum titanate-based fired body of the present invention is not particularly limited and may be a honeycomb structure, a rod-like structure, a tubular structure, a plate-like structure, or a crucible-like structure. In the case of being used as a ceramics filter such as DPF, the aluminum titanate-based fired body of the present invention is preferably a porous ceramics shaped body, and more preferably has a honeycomb structure.

The open porosity of the porous ceramics shaped body is preferably not lower than 35%. The upper limit of the open porosity is not particularly limited, and it may be about less than 55% for example.

Note that the "open porosity" here means open porosity (%) measured by the Archimedes' method in a manner of immersion in water according to JIS R1634. That is, the open porosity of the porous ceramics shaped body may be calculated according to the following formula.

$$\text{Open porosity (\%)} = 100 \times (M3\text{-}M1)/(M3\text{-}M2)$$

wherein, M1 is a dry weight (g) of the porous ceramics shaped body; M2 is a weight (g) of the porous ceramics shaped body in water; and M3 is a saturated weight (g) of the porous ceramics shaped body in water.

The porous ceramics shaped body preferably has a cumulative pore volume of pores having a pore diameter in a range of 4 to 20 $\mu$m , $V_{4\text{-}20}$, of not lower than 0.8 in the entire pore volume, and preferably has a cumulative pore volume of pores having a pore diameter in a range of 20 to 200 $\mu$m, $V_{20\text{-}200}$, of not higher than 0.1 in the entire pore volume. Note that the entire pore volume is a cumulative pore volume of pores with a pore diameter in a range of 0.005 to 200 $\mu$m, $V_{total}$.

When the porous ceramics shaped body having a lot of pores having pore diameters of smaller than 4 $\mu$m is used as a ceramics filter such as DPF, the pressure loss of a gas such as a exhaust gas which is discharged out of a diesel engine and is filtered may possibly become higher, and then the gas treatment capacity may be lowered. On the other hand, when the porous material having a lot of pores having pore diameters of exceeding 20 $\mu$m is used as a ceramics filter such as DPF, the diesel fine particles and the like may possibly be discharged out of the filter without being adsorbed in the pores.

A porous ceramics shaped body having one or more hollow parts in the inside may be a shaped body having hollow parts as spaces closed in the inside or a shaped body having hollow parts as through holes having apertures opened on the outer surface. Examples of the shaped body include a honeycomb porous ceramics shaped body (a honeycomb structure body of porous ceramics) having several cells (hollow parts) penetrating in the longitudinal direction in the inside; and a porous ceramics shaped body having a hollow tubular structure (e.g., a pipe-like structure).

A porous ceramics shaped body having less than one hollow part in the inside may be a porous shaped body having a sheet-like structure and the like.

The aluminum titanate-based fired body of the present invention may contain a glass phase. The glass phase means an amorphous phase containing $SiO_2$ as a main component. In this case, the content of the glass phase is preferably not higher than 5% by mass and preferably not lower than 2% by mass.

The process for producing an aluminum titanate-based fired body of the present invention can be preferably employed for producing the aluminum titanate-based fired body of the present invention comprising mainly an aluminum titanate-based crystal. That is, the aluminum titanate-based fired body of the present invention can be obtained by shaping a starting material mixture containing inorganic compound source powders and an additive; degreasing the obtained shaped body; and firing the degreased shaped body. An aluminum titanate-based fired body obtained by the process of the present invention comprises mainly an aluminum titanate-based crystal.

EXAMPLES

Hereinafter, the present invention will be described in detail with reference to examples; however the present invention should not be limited to these examples. In the respective examples and comparative examples, the mechanical strength after firing of the shaped bodies from the starting material mixture; the aluminum titanate-based conversion ratio (AT conversion ratio) of the obtained aluminum titanate-based fired bodies; pore diameter; open porosity; the average particle diameter and particle diameter distribution of the starting material powders used were measured in the following methods.

(1) Mechanical Strength

Honeycomb structured hollow piece was cut out from extrusion shaped body. The hollow piece had through holes penetrating in the longitudinal direction, and the through holes (cells) had the same direction as the longitudinal direction of the hollow piece. The hollow piece had the length of 5mm, and 3 x 3 cells (9 cells in total) having the cross-sectional shape of square with vertical length and transverse length of 1.0 to 1.3 mm, respectively. Consequently, the hollow piece had a cross-sectional shape of lattice-like square. The length of one side in the cross section of the hollow piece ranged from 4.8 to 5.1 mm. The hollow piece was heated to 500°C or 1000°C in an electric furnace, and cooled to room temperature thereafter. Ten of such hollow pieces were produced, and the load was measured at which each hollow piece was broken while a load was gradually added in the longitudinal direction and vertical direction to each hollow piece, and measured values of the load were provided for the calculation for the average value.

(2) AT conversion ratio

The aluminum titanate-based conversion ratio (AT conversion ratio) was calculated according to the following formula from integral intensity ($I_T$) of the peak (titania-rutile phase (110) plane) appearing at a point of $2\theta = 27.4°$ and integral intensity ($I_{AT}$) of the peak (aluminum magnesium titanate phase (230) plane] appearing at a point of $2\theta = 33.7°$ in a powder x-ray diffraction spectrum.

$$\text{AT conversion ratio} = I_{AT}/(I_T + I_{AT}) \times 100 \ (\%)$$

(3) Pore diameter

Small pieces of about 2 mm square obtained by crushing 0.4 g of each fired body were dried at 120°C for 4 hours in the air by using an electric furnace and the pore radius in a range of 0.001 to 100.0 $\mu$m was measured by a mercury pressure injection method thereafter. The value calculated by doubling pore radius exhibiting the maximum frequency on a pore volume basis was defined as a pore diameter (mode diameter). "Auto Pore III 9420" manufactured by Micromeritics Instrument Corporation was used as a measurement apparatus.

(4) Open porosity

The weight M2 (g) in water, weight M3 (g) in saturated water, and dry weight M1 (g) of each fired body were measured by the Archimedes' method in a manner of immersion in water according to JIS R1634, and the open porosity was calculated according to the following formula.

$$\text{Open porosity (\%)} = 100 \times (M3\text{-}M1)/(M3\text{-}M2)$$

(5) Average particle diameter and particle diameter distribution of starting material powder

Regarding a starting material powder having a relatively large particle diameter other than silica sol and alumina sol out of the starting material powders, the particle diameter corresponding to a cumulative percentage of 50% on a volume basis (D50) was measured in a range of not smaller than 0.1 $\mu$m and not larger than 1 mm by a laser diffractiometric particle diameter distribution measurement apparatus ("Microtrac HRA (X-100) manufactured by Nikkiso Co., Ltd.). The average particle diameters of silica sol and alumina sol; and the fraction (volume percentage) of each starting material powder having a particle diameter of not larger than 0.1 $\mu$m in the particle diameter distribution in the starting material powders were calculated based on the analysis values supplied by the supply company (Nissan Chemical Industries, Ltd.)

<Example 1>

Dried bodies in a honeycomb structure were obtained by using the following inorganic compound source powders. The prepared composition of the following inorganic compound source powders was $[Al_2O_3]/[TiO_2]/[MgO]/[SiO_2] = 35.1\%/51.3\%/9.6\%/4.0\%$ expressed on alumina $[Al_2O_3]$ basis, expressed on titania $[TiO_2]$ basis, expressed on magnesia $[MgO_2]$ basis, and expressed on silica $[SiO_2]$ basis by molar percentage. The content of the silicon source powder in the total amount of the aluminum source powder, titanium source powder, magnesium source powder, and silicon source powder was 4.0% by mass.

(1) Aluminum source powder

An aluminum oxide powder A (a-alumina powder) having an average particle diameter listed in Table 1: 28.7 parts by mass

(2) Titanium source powder

A titanium oxide powder (rutile type crystal) having an average particle diameter listed in Table 1: 49.0 parts by mass

(3) Magnesium source powder

A magnesia spinel powder having an average particle diameter listed in Table 1: 18.3 parts by mass

(4) Silicon source powder

(4-1) Glass frit ("CK0832", manufactured by Takara Standard) having an average particle diameter listed in Table 1: 2.0 parts by mass

(4-2) Silica sol ("Snowtex C", manufactured by Nissan Chemical Industries, Ltd., aqueous solution with 20% by mass as solid content, pH 8.5 to 9.0) having an average particle diameter listed in Table 1: 10.0 parts by mass

After the addition of 16.7 parts by mass of corn starch as a pore-forming agent having an average particle diameter listed in Table 1 described below, 9.1 parts by mass of methyl cellulose as a binder, 5.6 parts by mass of polyoxyalkylene alkylether as a dispersant, and 0.5 parts by mass of glycerin as a lubricant to a mixture of the aluminum source powder, titanium source powder, magnesium source powder, and silicon source powder, further 25.3 parts by mass of water as a dispersion medium was added thereto, and the mixture was kneaded by a kneader to prepare a ceramics green body (a starting material mixture for shaping). Successively, the ceramics green body was subjected to extrusion shaping to produce a shaped body in a honeycomb structure (cell density: 300 cpsi, cell wall thickness: 0.3 mm). The obtained shaped body was immediately heated by a microwave drier and dried by maintaining at 100°C for 5 hours thereafter.

A specimen for the mechanical strength measurement was cut out from the dried honeycomb body, fired at 500°C or 1000°C, and subjected to the mechanical strength measurement. Table 2 lists the measured values of the mechanical strength. The mechanical strength of the dried honeycomb body in the case of firing at 500°C was 0.20 kgf. The mechanical strength was rather considerably improved compared with that of Comparative Example 1. The mechanical strength thereof in the case of firing at 1000°C was 2.41 kgf and thus the mechanical strength was found to increase along with the increase in firing temperature.

Other dried honeycomb bodies were fired in atmospheric air in a process including a calcining (degreasing) period for removing the binder to obtain porous fired bodies in a honeycomb structure (honeycomb structure bodies). The highest temperature at firing period was 1500°C and the maintaining time at the highest temperature was adjusted to 5 hours.

Each of the obtained porous fired bodies was ground in a mortar, and the diffraction spectrum of the obtained powder was measured by a powder x-ray diffractometry to find that the powder exhibited a crystal peak of aluminum magnesium titanate. The AT conversion ratio of the obtained powder was measured to find 100%. The pore diameter of the obtained aluminum titanate-based fired body was 8.0 $\mu$m and the open porosity thereof was 43.7%.

The fired bodies thus have a relatively small pore diameter and extremely high open porosity and are expected to exhibit excellent characteristics as a filter.

(Example 2)

Dried shaped bodies in a honeycomb structure were obtained by using the following inorganic compound source powders. The prepared composition of the following inorganic compound source powders was $[Al_2O_3]/[TiO_2]/[MgO]/[SiO_2]$ = 35.1%/51.3%/9.6%/4.0%, which was the same as in Example 1, expressed on alumina $[Al_2O_3]$ basis, expressed on titania $[TiO_2]$ basis, expressed on magnesia $[MgO_2]$ basis, and expressed on silica $[SiO_2]$ basis by molar percentage. The content of the silicon source powder in the total amount of the aluminum source powder, titanium source powder, magnesium source powder, and silicon source powder was 4.0% by mass.

(1) Aluminum source powder

(1-1) An aluminum oxide powder A (a-alumina powder) having an average particle diameter listed in Table 1: z parts by mass

(1-2) Alumina sol ("Aluminasol AS-200", manufactured by Nissan Chemical Industries, Ltd., aqueous solution with 10% by mass as solid content, pH 4.0 to 6.0) having an average particle diameter listed in Table 1: 14.4 parts by mass

(2) Titanium source powder

A titanium oxide powder (rutile type crystal) having an average particle diameter listed in Table 1: 49.0 parts by mass

(3) Magnesium source powder

A magnesia spinel powder having an average particle diameter listed in Table 1: 18.3 parts by mass

(4) Silicon source powder

Glass frit ("CK0832", manufactured by Takara Standard) having an average particle diameter listed in Table 1: 4.0 parts by mass

After the addition of 16.7 parts by mass of cone starch as a pore-forming agent having an average particle diameter listed in Table 1 described below, 9.1 parts by mass of methyl cellulose as a binder, 5.6 parts by mass of polyoxyalkylene alkylether as a dispersant, and 0.5 parts by mass of glycerin as a lubricant to a mixture of the aluminum source powder, titanium source powder, magnesium source powder, and silicon source powder, further 25.3 parts by mass of water as a dispersion medium was added thereto, and the mixture was kneaded by a kneader to prepare a ceramics green body (a starting material mixture for shaping). Successively, the ceramics green body was subjected to extrusion shaping to produce a shaped body in a honeycomb structure (cell density: 300 cpsi, cell wall thickness: 0.3 mm). The obtained shaped body was immediately heated by a microwave drier and dried by maintaining at 100°C for 5 hours thereafter.

A specimen for mechanical strength measurement was cut out from the dried honeycomb body, fired at 500°C or 1000°C, and subjected to the mechanical strength measurement. Table 2 lists the measured values of the mechanical strength. The mechanical strength of the dried honeycomb body in the case of firing at 500°C was 0.37 kgf. The mechanical strength was rather considerably improved compared with that of Comparative Example 1. The mechanical strength thereof in the case of firing at 1000°C was 1.49 kgf and thus the mechanical strength was found to increase along with the increase in firing temperature.

Other dried honeycomb bodies were fired in atmospheric air in a process including a calcining (degreasing) period for removing the binder to obtain porous fired bodies in a honeycomb structure (honeycomb structure bodies). The highest temperature at firing period was 1500°C and the maintaining time at the highest temperature was adjusted to 5 hours.

Each of the obtained porous fired bodies was ground in a mortar, and the diffraction spectrum of the obtained powder was measured by a powder x-ray diffractometry to find that the powder exhibited a crystal peak of aluminum magnesium titanate. The AT conversion ratio of the obtained powder was measured to find 100%. The pore diameter of the obtained aluminum titanate-based fired body was 8.5 $\mu$m and the open porosity thereof was 47.3%.

The fired bodies thus have a relatively small pore diameter and extremely high open porosity and are expected to exhibit excellent characteristics as a filter.

(Example 3)

Dried shaped bodies in a honeycomb structure were obtained by using the following inorganic compound source powders. The prepared composition of the following inorganic compound source powders was $[Al_2O_3]/[TiO_2]/[MgO]/[SiO_2]$ = 35.1%/51.3%/9.6%/4.0%, which was the same as in Example 1, expressed on alumina $[Al_2O_3]$ basis, expressed on titania $[TiO_2]$ basis, expressed on magnesia $[MgO_2]$ basis, and expressed on silica $[SiO_2]$ basis by molar percentage. The content of the silicon source powder in the total amount of the aluminum source powder, titanium source powder, magnesium source powder, and silicon source powder was 4.0% by mass.

(1) Aluminum source powder

(1-1) An aluminum oxide powder A ($\alpha$-alumina powder) having an average particle diameter listed in Table 1: 27.3 parts by mass

(1-2) Alumina sol ("Aluminasol AS-20011, manufactured by Nissan Chemical Industries, Ltd., aqueous solution with 10% by mass as solid content, pH 4.0 to 6.0) having an average particle diameter listed in Table: 14.4 parts by mass

(2) Titanium source powder

A titanium oxide powder (rutile type crystal) having an average particle diameter listed in Table L: 49.0 parts by mass

(3) Magnesium source powder

A magnesia spinel powder having an average particle diameter listed in Table 1: 18.3 parts by mass

(4) Silicon source powder

(4-1) Glass frit ("CK0832", manufactured by Takara Standard) having an average particle diameter listed in Table 1: 2.0 parts by mass

(4-2) Silica sol ("Snowtex C", manufactured by Nissan Chemical Industries, Ltd., aqueous solution with 20% by mass as solid content, pH 8. 5 to 9.0) having an average particle diameter listed in Table 1: 10.0 parts by mass

After the addition of 16.7 parts by mass of corn starch as a pore-forming agent having an average particle diameter listed in Table 1 described below, 9.1 parts by mass of methyl cellulose as a binder, 5.6 parts by mass of polyoxyalkylene alkylether as a dispersant, and 0.5 parts by mass of glycerin as a lubricant to a mixture of the aluminum source powder, titanium source powder, magnesium source powder, and silicon source powder, further 25.3 parts by mass of water as a dispersion medium was added thereto, and the mixture was kneaded by a kneader to prepare a ceramics green body (a starting material mixture for shaping). Successively, the ceramics green body was subjected to extrusion shaping to produce a shaped body in a honeycomb structure (cell density: 300 cpsi, cell wall thickness: 0.3 mm). The obtained shaped body was immediately heated by a microwave drier and dried by maintaining at 100°C for 5 hours thereafter.

A specimen for mechanical strength measurement was cut out from the dried honeycomb body, fired at 500°C or 1000°C, and subjected to the mechanical strength measurement. Table 2 lists the measured values of the mechanical strength. The mechanical strength of the dried honeycomb body in the case of firing at 500°C was 0.52 kgf. The mechanical strength was rather considerably improved compared with that of Comparative Example 1. The mechanical strength thereof in the case of firing at 1000°C was 7.14 kgf and thus the mechanical strength was found to increase along with the increase in firing temperature.

Other dried honeycomb bodies were fired in atmospheric air in a process including a calcining (degreasing) period for removing the binder to obtain porous fired bodies in a honeycomb structure (honeycomb structure bodies). The highest temperature at firing period was 1500°C and the maintaining time at the highest temperature was adjusted to 5 hours.

Each of the obtained porous fired bodies was ground in a mortar and the diffraction spectrum of the obtained powder was measured by a powder x-ray diffractometry to find that the powder exhibited a crystal peak of aluminum magnesium titanate. The AT conversion ratio of the obtained powder was measured to find 100%. The pore diameter of the obtained porous aluminum titanate-based fired body was 8.5 $\mu$m and the open porosity thereof was 42.8%. The fired bodies thus have a relatively small pore diameter and extremely high open porosity and are expected to exhibit excellent characteristics as a filter.

(Example 4)

Dried shaped bodies in a honeycomb structure were obtained by using the following inorganic compound source powders. The prepared composition of the following inorganic compound source powders was $[Al_2O_3]/[TiO_2]/[MgO]/[SiO_2] = 35.1\%/51.3\%/9.6\%/4.0\%$, which was the same as in Example 1, expressed on alumina $[Al_2O_3]$ basis, expressed on titania $[TiO_2]$ basis, expressed on magnesia $[MgO_2]$ basis, and expressed on silica $[SiO_2]$ basis by molar percentage. The content of the silicon source powder in the total amount of the aluminum source powder, titanium source powder, magnesium source powder, and silicon source powder was 4.0% by mass.

(1) Aluminum source powder

(1-1) An aluminum oxide powder A ($\alpha$-alumina powder) having an average particle diameter listed in Table 1: 27.7 parts by mass

(1-2) Alumina sol ("Aluminasol AS-200", manufactured by Nissan Chemical Industries, Ltd., aqueous solution with 10% by mass as solid content, pH 4.0 to 6.0) having an average particle diameter listed in Table 1: 10.8 parts by mass

(2) Titanium source powder

A titanium oxide powder (rutile type crystal) having an average particle diameter listed in Table 1: 49.0 parts by mass

(3) Magnesium source powder

A magnesia spinel powder having an average particle diameter listed in Table 1: 18.3 parts by mass

(4) Silicon source powder

(4-1) Glass frit ("CK0832", manufactured by Takara Standard) having an average particle diameter listed in Table 1: 2.5 parts by mass

(4-2) Silica sol ("Snowtex C", manufactured by Nissan Chemical Industries, Ltd., aqueous solution with 20% by mass as solid content, pH 8.5 to 9.0) having an average particle diameter listed in Table 1: 7.5 parts by mass

After the addition of 16.7 parts by mass of corn starch as a pore-forming agent having an average particle diameter listed in Table 1 described below, 9.1 parts by mass of methyl cellulose as a binder, 5.6 parts by mass of polyoxyalkylene alkylether as a dispersant, and 0.5 parts by mass of glycerin as a lubricant to a mixture of the aluminum source powder, titanium source powder, magnesium source powder, and silicon source powder, further 25.3 parts by mass of water as a dispersion medium was added thereto, and the mixture was kneaded by a kneader to prepare a ceramics green body (a starting material mixture for shaping). Successively, the ceramics green body was subjected to extrusion shaping to produce a shaped body in a honeycomb structure (cell density: 300 cpsi, cell wall thickness: 0.3 mm). The obtained shaped .body was immediately heated by a microwave drier and dried by maintaining at 100°C for 5 hours thereafter.

A specimen for mechanical strength measurement was cut out from the dried honeycomb body, fired at 500°C or 1000°C, and subjected to the mechanical strength measurement. Table 2 lists the measured values of the mechanical strength. The mechanical strength of the dried honeycomb body in the case of firing at 500°C was 0.40 kgf. The mechanical strength was rather considerably improved compared with that of Comparative Example 1. The mechanical strength thereof in the case of firing at 1000°C was 6.08 kgf and thus the mechanical strength was found to increase along with the increase in firing temperature.

Other dried honeycomb bodies were fired in atmospheric air in a process including a calcining (degreasing) period for removing the binder to obtain porous fired bodies in a honeycomb structure (honeycomb structure bodies). The highest temperature at firing period was 1500°C and the maintaining time at the highest temperature was adjusted to 5 hours.

Each of the obtained porous fired bodies was ground in a mortar and the diffraction spectrum of the obtained powder was measured by a powder x-ray diffractometry to find that the powder exhibited a crystal peak of aluminum magnesium titanate. The AT conversion ratio of the obtained powder was measured to find 100%. The pore diameter of the obtained porous aluminum titanate-based fired body was 8.5 $\mu$m and the open porosity thereof was 43.4%. The fired bodies thus have a relatively small pore diameter and extremely high open porosity and are expected to exhibit excellent characteristics as a filter.

(Example 5)

Dried shaped bodies in a honeycomb structure were obtained by using the following inorganic compound source powders. The prepared composition of the following inorganic compound source powders was $[Al_2O_3]/[TiO_2]/[MgO]/[SiO_2]$ = 35.1%/51.3%/9.6%/4.0%, which was the same as in Exampe 1, expressed on alumina $[Al_2O_3]$ basis, expressed on titania $[TiO_2]$ basis, expressed on magnesia $[MgO_2]$ basis, and expressed on silica $[SiO_2]$ basis by molar percentage. The content of the silicon source powder in the total amount of the aluminum source powder, titanium source powder, magnesium source powder, and silicon source powder was 4.0% by mass.

(1) Aluminum source powder

(1-1) An aluminum oxide powder A (α-alumina powder) having an average particle diameter listed in Table 1: 28.0 parts by mass

(1-2) Alumina sol ("Aluminasol AS-200", manufactured by Nissan Chemical Industries, Ltd., aqueous solution with 10% by mass as solid content, pH 4.0 to 6.0) having an average particle diameter listed in Table 1: 7.2 parts by mass

(2) Titanium source powder

A titanium oxide powder (rutile type crystal) having an average particle diameter listed in Table 1: 49.0 parts by mass

(3) Magnesium source powder

A magnesia spinel powder having an average particle diameter listed in Table 1: 18.3 parts by mass

(4) Silicon source powder

(4-1) Glass frit ("CK0832", manufactured by Takara Standard) having an average particle diameter listed in Table 1: 3.0 parts by mass

(4-2) Silica sol ("Snowtex C", manufactured by Nissan Chemical Industries, Ltd., aqueous solution with 20% by mass as solid content, pH 8.5 to 9.0) having an average particle diameter listed in Table 1: 5.0 parts by mass

After the addition of 16.7 parts by mass of corn starch as a pore-forming agent having an average particle diameter listed in Table 1 described below, 9.1 parts by mass of methyl cellulose as a binder, 5.6 parts by mass of polyoxyalkylene alkylether as a dispersant, and 0.5 parts by mass of glycerin as a lubricant to a mixture of the aluminum source powder, titanium source powder, magnesium source powder, and silicon source powder, further 25.3 parts by mass of water as a dispersion medium was added thereto, and the mixture was kneaded by a kneader to prepare a ceramics green body (a starting material mixture for shaping). Successively, the ceramics green body was subjected to extrusion shaping to produce a shaped body in a honeycomb structure (cell density: 300 cpsi, cell wall thickness: 0.3 mm). The obtained shaped body was immediately heated by a microwave drier and dried by maintaining at 100°C for 5 hours thereafter.

A specimen for mechanical strength measurement was cut out from the dried honeycomb body, fired at 500°C or 1000°C, and subjected to the mechanical strength measurement. Table 2 lists the measured values of the mechanical strength. The mechanical strength of the dried honeycomb body in the case of firing at 500°C was 0.27 kgf. The mechanical strength was rather considerably improved compared with that of Comparative Example 1. The mechanical strength thereof in the case of firing at 1000°C was 2.84 kgf and thus the mechanical strength was found to increase along with the increase in firing temperature.

Other dried honeycomb bodies were fired in atmospheric air in a process including a calcining (degreasing) period for removing the binder to obtain porous fired bodies in a honeycomb structure (honeycomb structure bodies). The highest temperature at firing period was 1500°C and the maintaining time at the highest temperature was adjusted to 5 hours.

Each of the obtained porous fired bodies was ground in a mortar and the diffraction spectrum of the obtained powder was measured by a powder x-ray diffractometry to find that the powder exhibited a crystal peak of aluminum magnesium titanate. The AT conversion ratio of the obtained powder was measured to find 100%. The pore diameter of the obtained porous aluminum titanate-based fired body was 8.5 μm and the open porosity thereof was 45.5%. The fired bodies thus have a relatively small pore diameter and extremely high open porosity and are expected to exhibit excellent characteristics as a filter.

(Comparative Example 1)

Dried shaped bodies in a honeycomb structure were obtained by using the following inorganic compound source powders. The prepared composition of the following inorganic compound source powders was $[Al_2O_3]/[TiO_2]/[MgO]/[SiO_2]$ = 35.1%/51.3%/9.6%/4.0%, which was the same as in Example 1, expressed on alumina $[Al_2O_3]$ basis, expressed on titania $[TiO_2]$ basis, expressed on magnesia $[MgO_2]$ basis, and expressed on silica $[SiO_2]$ basis by molar percentage. The content of the silicon source powder in the total amount of the aluminum source powder, titanium source powder, magnesium source powder, and silicon source powder was 4.0% by mass.

(1) Aluminum source powder

An aluminum oxide powder A (α-alumina powder) having an average particle diameter listed in Table 1: 28.7 parts by mass

(2) Titanium source powder

A titanium oxide powder (rutile type crystal) having an average particle diameter listed in Table 1: 49.0 parts by mass

(3) Magnesium source powder

A magnesia spinel powder having an average particle diameter listed in Table 1: 18.3 parts by mass

(4) Silicon source powder

Glass frit ("CK0832", manufactured by Takara Standard) having an average particle diameter listed in Table 1: 4.0 parts by mass

After the addition of 16.7 parts by mass of corn starch as a pore-forming agent having an average particle diameter listed in Table 1 described below, 9.1 parts by mass of methyl cellulose as a binder, 5.6 parts by mass of polyoxyalkylene alkylether as a dispersant, and 0.5 parts by mass of glycerin as a lubricant to a mixture of the aluminum source powder, titanium source powder, magnesium source powder, and silicon source powder, further 34.9 parts by mass of water as a dispersion medium was added thereto, and the mixture was kneaded by a kneader to prepare a ceramics green body (a starting material mixture for shaping). Successively, the ceramics green body was subjected to extrusion shaping to produce a shaped body in a honeycomb structure (cell density: 300 cpsi, cell wall thickness: 0.3 mm). The obtained shaped body was immediately heated by a microwave drier and dried by maintaining at 100°C for 5 hours thereafter.

A specimen for mechanical strength measurement was cut out from the dried honeycomb body, fired at 500°C or 1000°C, and subjected to the mechanical strength measurement. Table 2 lists the measured values of the mechanical strength. The mechanical strength of the dried honeycomb body in the case of firing at 500°C was 0.12 kgf and the dried honeycomb body was so fragile as to be broken with slight stress. The mechanical strength thereof in the case of firing at 1000°C was 1.83 kgf and thus the mechanical strength was found to increase along with the increase in firing temperature.

Other dried honeycomb bodies were fired in atmospheric air in a process including a calcining (degreasing) period for removing the binder to obtain porous fired bodies in a honeycomb structure (honeycomb structure bodies). The highest temperature at firing period was 1500°C and the maintaining time at the highest temperature was adjusted to 5 hours.

Each of the obtained porous fired bodies was ground in a mortar and the diffraction spectrum of the obtained powder was measured by a powder x-ray diffractometry to find that the powder exhibited a crystal peak of aluminum magnesium titanate. The AT conversion ratio of the obtained powder was measured to find 100%. The pore diameter of the obtained aluminum titanate-based fired bodies was 10.7 μm and the open porosity thereof was 46.1%.

[Table 1]

|  | average particle diameter (μm) |
| --- | --- |
| aluminum oxide powder | **36.08** |
| titanium oxide powder | **1.03** |
| magnesia spinet powder | **5.20** |
| glass frit | **8.80** |
| corn starch | **15.4** |
| silica sol | **0.015** |

(continued)

|  | average particle diameter ($\mu$m) |
|---|---|
| alumina sol | **0.05** |
| alumina sol : aqueous solution with 10% by mass as solid content<br>silica sol : aqueous solution with 20% by mass as solid content | |

[Table 2]

Table 2

| | Example 1 | | Example 2 | | Example 3 | | Example 4 | | Example 5 | | Comparative Example 1 | |
|---|---|---|---|---|---|---|---|---|---|---|---|---|
| | experimental value | not larger than 0.1 μm (wt%) | experimental value | not larger than 0.1 μm (wt%) | experimental value | not larger than 0.1 μm (wt. %) | experimental value | not larger 0.1 μm (wt%) | experimental value | not larger than 0.1 μm (wt%) | experimental value | not larger than 0.1 μm (wt%) |
| aluminum oxide powder (g) | 28.7 | - | 27.3 | - | 27.3 | - | 7.7 | - | 28.0 | - | 28.7 | - |
| alumina sol (g) | 0.0 | 0.0 | 14.4 | 1.4 | 14.4 | 1.4 | 10.8 | 1.1 | 7.2 | 0.7 | 0.0 | 0.0 |
| titanium oxide powder (g) | 49.0 | - | 49.0 | - | 49.0 | - | 49.0 | - | 49.0 | - | 49.0 | - |
| titania sol (g) | 0.0 | 0.0 | 0.0 | 0.0 | 0.0 | 0.0 | 0.0 | 0.0 | 0.0 | 0.0 | 0.0 | 0.0 |
| magnesia spinel powder (g) | 18.3 | - | 18.3 | - | 18.3 | - | 18.3 | - | 18.3 | - | 18.3 | - |
| magnesia sol (g) | 0.0 | 0.0 | 0.0 | 0.0 | 0.0 | 0.0 | 0.0 | 0.0 | 0.0 | 0.0 | 0.0 | 0.0 |
| glass frit (g) | 2.0 | - | 4.0 | - | 2.0 | - | 2.5 | - | 3.0 | - | 4.0 | - |
| silica sol (g) | 10.0 | 2.0 | 0.0 | 0.0 | 10.0 | 2.0 | 7.5 | 1.5 | 5.0 | 1.0 | 0.0 | 0.0 |

(continued)

| | Example 1 | | Example 2 | | Example 3 | | Example 4 | | Example 5 | | Comparative Example 1 | |
|---|---|---|---|---|---|---|---|---|---|---|---|---|
| | experimental value | not larger than 0.1 μm (wt%) | experimental value | not larger than 0.1 μm (wt%) | experimental value | not larger than 0.1 μm (wt. %) | experimental value | not larger 0.1 μm (wt%) | experimental value | not larger than 0.1 μm (wt%) | experimental value | not larger than 0.1 μm (wt%) |
| total mass of particles having a particle diameter of not larger than 0.1 μm in inorganic compound source powders wt%; | - | 2.0 | - | 1.4 | - | 3.4 | - | 2.6 | - | 1.7 | - | 0.0 |
| corn starch (g) | 16.7 | - | 16.7 | - | 16.7 | - | 16.7 | - | 16.7 | - | 16.7 | - |
| binder (g) | 9.1 | | 9.1 | - | 9.1 | - | 9.1 | - | 9.1 - | - | 9.1 | - |
| dispersant (g) | 5.6 | - | 5.6 | - | 5.6 | - | 5.6 | - | 5.6 | - | 5.6 | - |
| lubricant (glycerin) (g) | 0.5 | - | 0.5 | - | 0.5 | - | 0.5 | - | 0.5 | - | 0.5 | - |
| dispersion medium (g) | 25.3 | - | 21.2 | - | 14.6 | - | 20.9 | - | 26.1 | - | 34.9 | - |
| total dispersion medium (g) | 33.3 | - | 34.2 | - | 35.6 | - | 36.6 | - | 36.6 | - | 34.9 | - |

| | Example 1 | | Example 2 | | Example 3 | | Example 4 | | Example 5 | | Comparative Example 1 | |
|---|---|---|---|---|---|---|---|---|---|---|---|---|
| | experimental value | not larger than 0.1 μm (wt%) | experimental value | not larger than 0.1 μm (wt%) | experimental value | not larger than 0.1 μm (wt. %) | experimental value | not larger 0.1 μm (wt%) | experimental value | not larger than 0.1 μm (wt%) | experimental value | not larger than 0.1 μm (wt%) |
| mechanical strength after firing at 500°C (kgf) | 0.20 | | 0.37 | | 0.52 | | 0.40 | | 0.27 | | 0.12 | |
| mechanical strength after firing at 1000°C (kgf) | 2.41 | | 1.49 | | 7.14 | | 6.08 | | 2.84 | | 1.83 | |

It should be understood that the embodiments and examples disclosed herein are illustrative and are not restrictive in all respects. The scope of the present invention is not shown by the description described above, but is shown by the claims, and it is intended that the meaning equivalent to the claims and all modifications within the claims are contained in the scope of the present invention.

INDUSTRIAL APPLICABILITY

The present invention aims to provide a process for producing an aluminum titanate-based fired body in which a shaped body obtained has high mechanical strength and can retain its shape after degreasing and firing, and an aluminum titanate-based fired body obtained thereby.

**Claims**

1. A process for producing an aluminum titanate-based fired body, comprising shaping a starting material mixture containing inorganic compound source powders including an aluminum source powder and a titanium source powder, as well as an additive, degreasing the obtained shaped body at 150 to 900°C, and firing the degreased shaped body at not lower than 1300°C, wherein
   the inorganic compound source powders contain 1 to 5 parts by mass of particles having a particle diameter of not larger than 0.1 $\mu$m in 100 parts by mass thereof.

2. The process according to claim 1, wherein the inorganic compound source powders further include a silicon source powder.

3. The process according to claim 1 or 2, wherein the inorganic compound source powders further include a magnesium source powder.

4. The process according to any one of claims 1 to 3, wherein the molar ratio of the aluminum source powder expressed on $Al_2O_3$ basis to the titanium source powder expressed on $TiO_2$ basis is in a range of 35 / 65 to 45 / 55 in the starting material mixture.

5. The process according to any one of claims 1 to 4, wherein the shaped body has a honeycomb structure.

6. An aluminum titanate-based fired body obtained by the process according to any one of claims 1 to 5.

## INTERNATIONAL SEARCH REPORT

| | International application No. |
|---|---|
| | PCT/JP2010/065361 |

### A. CLASSIFICATION OF SUBJECT MATTER
*C04B35/46*(2006.01)i

According to International Patent Classification (IPC) or to both national classification and IPC

### B. FIELDS SEARCHED

Minimum documentation searched (classification system followed by classification symbols)
C04B35/46

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | WO 2005/105704 A1  (Ohcera Co., Ltd.),<br>10 November 2005 (10.11.2005),<br>claims; paragraphs [0024], [0031], [0032]<br>& US 2007/0224110 A1    & EP 1741684 A1<br>& CA 2563600 A         & KR 10-2007-0012365 A<br>& CN 1946653 A | 6<br>1-5 |
| Y | JP 3-23256 A  (Toyota Motor Corp.),<br>31 January 1991 (31.01.1991),<br>claims; page 3, lower right column, line 18 to<br>page 4, lower right column, line 6; fig. 2<br>(Family: none) | 1-5 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>15 November, 2010 (15.11.10) | Date of mailing of the international search report<br>22 November, 2010 (22.11.10) |
|---|---|
| Name and mailing address of the ISA/<br>Japanese Patent Office | Authorized officer |
| Facsimile No. | Telephone No. |

Form PCT/ISA/210 (second sheet) (July 2009)

# EP 2 474 513 A1

**INTERNATIONAL SEARCH REPORT**

International application No.

PCT/JP2010/065361

C (Continuation). DOCUMENTS CONSIDERED TO BE RELEVANT

| Category* | Citation of document, with indication, where appropriate, of the relevant passages | Relevant to claim No. |
|---|---|---|
| A | WO 2009/093560 A1 (Sumitomo Chemical Co., Ltd.), 30 July 2009 (30.07.2009), claims & JP 2009-196881 A | 1-6 |
| A | JP 2003-321286 A (Japan Fine Ceramics Center), 11 November 2003 (11.11.2003), claims; paragraphs [0014], [0022] & US 2005/0035504 A1 & WO 2002/040203 A1 & CA 2429344 A | 1-6 |
| A | JP 2001-334517 A (Denki Kagaku Kogyo Kabushiki Kaisha), 04 December 2001 (04.12.2001), paragraph [0026] (Family: none) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005105704 A